Europäisches Patentamt

European Patent Office

Office européen des brevets

(11) Veröffentlichungsnummer: **0 476 727 B1**

(12) **EUROPÄISCHE PATENTSCHRIFT**

(45) Veröffentlichungstag der Patentschrift: **09.11.94**

(51) Int. Cl.⁵: **B01D  53/34**

(21) Anmeldenummer: **91202001.3**

(22) Anmeldetag: **02.08.91**

(54) **Verfahren zur Vermeidung der Bildung von hochkondensierten aromatischen Kohlenwasserstoffen und Dioxinen in Verbrennungsanlagen.**

(30) Priorität: **22.08.90 DE 4026508**

(43) Veröffentlichungstag der Anmeldung:
**25.03.92 Patentblatt  92/13**

(45) Bekanntmachung des Hinweises auf die
Patenterteilung:
**09.11.94 Patentblatt  94/45**

(84) Benannte Vertragsstaaten:
**AT BE CH DE FR GB IT LI NL**

(56) Entgegenhaltungen:
**EP-A- 0 402 972**
**DE-A- 3 623 015**
**DE-C- 3 632 720**

(73) Patentinhaber: **METALLGESELLSCHAFT Aktiengesellschaft
Postfach 10 15 01,
Reuterweg 14
D-60015 Frankfurt (DE)**

(72) Erfinder: **Weber, Ekkehard, Prof. Dr.
Amselweg 6
W-4300 Essen 17 (DE)**

**Beschreibung**

Die Erfindung betrifft ein Verfahren zur Vermeidung der Bildung von hochkondensierten aromatischen Kohlenwasserstoffen und Dioxinen in Verbrennungsanlagen, vorzugsweise in Müllverbrennungsanlagen, bei dem die Entstaubung der Verbrennungsabgase hinter der Feuerung bei Temperaturen von 300 bis 1000°C, vorzugsweise 400 bis 900°C, erfolgt.

Es ist bekannt, daß sich bei Verbrennungsprozessen und insbesondere bei der Abfallverbrennung hochkondensierte aromatische Kohlenwasserstoffe sowie Dioxine bilden, die mit dem Filterstaub sowie mit dem Abgas aus der Verbrennungsanlage ausgetragen werden. Mit dem Sammelbegriff "hochkondensierte aromatische Kohlenwasserstoffe" werden die mehrkernigen Aromaten bezeichnet, die auch eine oder mehrere OH-Gruppen aufweisen können. Mit dem Sammelbegriff "Dioxine" werden die polychlorierten Dibenzo-p-Dioxine und die polychlorierten Dibenzofurane bezeichnet. Zu den Dioxinen gehören insgesamt 210 Isomere, von denen einige außerordentlich giftig sind. Die hochkondensierten aromatischen Kohlenwasserstoffe sind ebenfalls gesundheitsschädlich, da sie als krebserregende Substanzen gelten. Wegen der Giftigkeit der hochkondensierten aromatischen Kohlenwasserstoffe und der Dioxine ist es erforderlich, diese Verbindungen aus dem Filterstaub bzw. dem Abgas zu entfernen oder die Bildung dieser Verbindungen in der Verbrennungsanlage zu vermeiden.

Es ist bekannt, daß in Verbrennungsanlagen bei 300 bis 400°C - also während der Abkühlung der Abgase und der Asche - durch Rekombination organischer Radikale in Gegenwart von Sauerstoff hochkondensierte aromatische Kohlenwasserstoffe in unterschiedlichen Mengen gebildet werden, die auch OH-Gruppen enthalten können. Es ist ferner bekannt, daß sich in Verbrennungsanlagen bei der Abkühlung von Abgasen und Asche im Temperaturbereich von 300°C bis 400°C Dioxine bilden, was darauf zurückgeführt wird, daß sich bei höheren Verbrennungstemperaturen aus den vorhandenen Chlorverbindungen in Gegenwart von Sauerstoff Chlor bildet, das dann im Verlauf der Abkühlung der Abgase und der Asche in Gegenwart organischer Radikale, organischer Verbindungen und/oder Kohlenstoff Dioxine bildet. Diese Reaktion wird durch die in den Flugstäuben vorhandenen Schwermetallverbindungen (Oxide) katalysiert. Daher wurde bereits vorgeschlagen, die Flugasche aus dem Abgasstrom von Verbrennungsanlagen bei Temperaturen oberhalb 300°C abzutrennen, da bekannt ist, daß hochkondensierte aromatische Kohlenwasserstoffe sowie Dioxine oberhalb 600°C thermisch instabil sind.

Aus der DE-A-3 623 015 ist es bekannt, zur Verhinderung der Bildung von organischen Schadstoffen bei Verbrennungs prozessen Ammoniak als Inhibitor in den Economiser bei 250 bis 400°C zuzugeben. Aus der DE-A-3 644 381 ist ein Verfahren zur Minimierung von Schadstoff-Emissionen aus Verbrennungsanlagen bekannt, bei dem die Entstaubung der Rauchgase im Temperaturbereich um oder oberhalb 300°C unmittelbar hinter der Feuerung vor oder im ersten Teilbereich des Wärmeaustauschers erfolgt. Die Entstaubung wird in einer Trenndüse (Fliehkraft-Entstauber) aus keramischem Material oder in einem Schüttschichtfilter durchgeführt. Mit dem in der DE-A 3 644 381 vorgeschlagenen Verfahren soll die katalytische Bildung von Dioxinen durch die Flugstaub-Partikel im Rauchgas während der Abkühlphase verhindert werden. Da sich gezeigt hat, daß im Rauchgas von Verbrennungsanlagen, die mit einem Schüttschichtfilter und/oder einem Fliehkraft-Entstauber entstaubt werden, Staubgehalte > 5 mg/Nm$^3$ vorliegen und daß bereits diese geringen Staubgehalte ausreichen, um die Bildung von hochkondensierten aromatischen Kohlenwasserstoffen und insbesondere Dioxinen zu katalysieren, wurde in der deutschen Patentanmeldung DE-A-39 19 790 (eingereicht am 16.6.89, veröffentlicht am 20.12.90) ein Verfahren zur Vermeidung der Bildung von hochkondensierten aromatischen Kohlenwasserstoffen und Dioxinen in Verbrennungsanlagen vorgeschlagen, das völlig betriebssicher arbeitet und die Entstehung der vorgenannten Stoffe während der Abkühlphase der Abgase und der Asche zuverlässig verhindert, so daß sie in den Filterstäuben und den Abgasen nicht mehr nachweisbar sind. Das in der deutschen Patentanmeldung DE-A-39 19 790 vorgeschlagene Verfahren ist dadurch gekennzeichnet, daß zur Entstaubung der Verbrennungsabgase ein aus SiO$_2$, Al$_2$O$_3$ und/oder ZrO$_2$ sowie einem anorganischen Bindemittel bestehendes keramisches Filterelement mit einem Porenvolumen von 50 bis 90 % verwendet wird. Der Einsatz derartiger Filterelemente garantiert im Reingas mindestens einen Reststaubgehalt von <2 mg/Nm$^3$. Diese Staubmenge reicht mit Sicherheit nicht mehr aus, um bei der Abkühlung des Reingases die Bildung hochkondensierter aromatischer Kohlenwasserstoffe und Dioxine zu katalysieren. In der deutschen Patentanmeldung DE-A-39 19 790 wird ferner vorgeschlagen, daß der von den Filterelementen abgereinigte Staub in einem geschlossenen Gefäß unter Luftabschluß abgekühlt wird, wodurch sichergestellt ist, daß auch während des Rückspülvorgangs und des Staubaustrags keine hochkondensierten aromatischen Kohlenwasserstoffe und keine Dioxine gebildet werden.

Überraschenderweise wurde nun gefunden, daß auf eine Abkühlung des abgereinigten Staubs unter Luftabschluß verzichtet werden kann, wenn dem heißen Verbrennungsabgas NH$_3$, Ammoniumsalze, aliphati-

sche primäre, sekundäre oder tertiäre Amine, Salze der Amine, Harnstoff, Eiweißkörper, Eiweißabbauprodukte oder Abfallprodukte, die wenigstens einen der vorgenannten Stoffe bzw. eine der vorgenannten Stoffgruppen enthalten, zugegeben werden. Offensichtlich blockiert der in allen vorgenannten Verbindungen enthaltene Ammoniumstickstoff die katalytische Bildung von hochkondensierten aromatischen Kohlenwasserstoffen und Dioxinen aus organischen Radikalen und freien Halogenen in Gegenwart von Sauerstoff und Schwermetallverbindungen. Der Erfindung liegt daher die Aufgabe zugrunde, das in der deutschen Patentanmeldung DE-A-39 19 790 vorgeschlagene Verfahren zur Vermeidung der Bildung von hochkondensierten aromatischen Kohlenwasserstoffen und Dioxinen in Verbrennungsanlagen, vorzugsweise in Müllverbrennungsanlagen, bei dem die Entstaubung der Verbrennungsabgase hinter der Feuerung bei Temperaturen von 300 bis 1000°C, vorzugsweise 400 bis 900°C, erfolgt, in der Weise weiterzubilden, daß seine Betriebssicherheit erhöht wird.

Die der Erfindung zugrundeliegende Aufgabe wird dadurch gelöst, daß den Verbrennungsabgasen hinter der Feuerung in einem Temperaturbereich von 400 bis 1000°C, vorzugsweise 600 bis 900°C, $NH_3$, Ammoniumsalze, aliphatische primäre, sekundäre oder tertiäre Amine, Salze der Amine, Harnstoff, Eiweißkörper, Eiweißabbauprodukte oder organische Abfälle, die Ammoniumstickstoff enthalten, in einer solchen Menge zugegeben werden, daß in einem $Nm^3$ Verbrennungsabgas 0,1 bis 2 g Ammoniumstickstoff vorhanden sind, und daß zur Staubabscheidung ein aus $SiO_2$, $Al_2O_3$ und/oder $ZrO_2$ sowie einem anorganischen Bindemittel bestehendes keramisches Filterelement mit einem Porenvolumen von 50 bis 90 % verwendet wird. Hierdurch wird in vorteilhafter Weise erreicht, daß die Asche einen Gehalt an Dioxinen und hochkondensierten aromatischen Kohlenwasserstoffen hat, der in jedem Fall weit unterhalb der zulässigen Grenzwerte liegt, auch wenn die Asche unter Luftzutritt abgekühlt wird. Auch das nach dem erfindungsgemäßen Verfahren gereinigte Verbrennungsabgas ist hinsichtlich seines Gehalts an Dioxinen und hochkondensierten aromatischen Kohlenwasserstoffen völlig unbedenklich. Es wird also nicht nur die Bildung und Adsorption der vorgenannten Schadstoffe an den Stäuben verhindert, sondern es werden auch geringe Spuren dieser Schadstoffe, die eventuell noch im Abgas vorhanden sind, beseitigt. Bei Großanlagen sind mehrere erfindungsgemäße Filterelemente in einem Filter angeordnet.

Nach der Erfindung ist es besonders vorteilhaft, wenn als organischer Abfall Gülle verwendet wird, da die Gülle einen recht hohen Gehalt an Ammoniumstickstoff hat und da die in der Gülle enthaltenen anorganischen Verbindungen problemlos an dem zur Entstaubung verwendeten Filterelement zurückgehalten werden. Darüber hinaus steht Gülle kostenlos zur Verfügung und muß in Zukunft in steigendem Maße in Abfallbeseitigungsanlagen vernichtet werden.

Nach der Erfindung ist ferner vorgesehen, daß dem keramischen Filterelement ein Fliehkraftabscheider, vorzugsweise ein Zyklon, vorgeschaltet wird. Hierdurch wird erreicht, daß die größeren Staubteilchen bereits vor dem Filterelement abgetrennt werden, was zu einer Entlastung des Filterelements führt. Durch den Fliehkraftabscheider tritt auch dann eine Entlastung des Filterelements ein, wenn eine größere Staubmenge aus den Abgasen abzutrennen ist.

Nach der Erfindung ist schließlich vorgesehen, daß $NH_3$, Ammoniumsalze, aliphatische primäre, sekundäre oder tertiäre Amine, Salze der Amine, Harnstoff, Eißweißkörper, Eiweißabbauprodukte oder organische Abfälle, die Ammoniumstickstoff enthalten, den Verbrennungsabgasen in den Prozeßapparaten zugegeben werden, die der Entstaubung der Abgase dienen. Dies ist besonders vorteilhaft, da im Entstaubungsbereich relativ große Gasverweilzeiten und weitgehend gleichbleibende Temperaturen, vorzugsweise 600 bis 900°C, herrschen.

Die Verwendung von ammoniumstickstoffhaltigen Verbindungen zur Entfernung von Stickoxiden aus Abgasen ist an sich bekannt, und auch beim erfindungsgemäßen Verfahren tritt neben der Vermeidung der Bildung von hochkondensierten aromatischen Kohlenwasserstoffen und Dioxinen eine merkliche Reduktion des Stickoxidgehalts der Verbrennungsabgase ein. In der DE-B-2 411 672 wird ein Verfahren zum Entfernen von Stickstoffmonoxid aus sauerstoffhaltigen Verbrennungsabgasen durch selektive Reduktion vorgeschlagen, bei dem der Stickstoffmonoxid enthaltende Verbrennungsabgasstrom in einer homogenen Gasphasenreaktion mit 0,4 bis 10 Mol Ammoniak oder einer Ammoniakvorstufe - also einem Ammoniumstickstoff enthaltenden Stoff - je Mol Stickstoffmonoxid in Gegenwart oder Abwesenheit eines paraffinischen, olefinischen oder aromatischen Kohlenwasserstoffs oder deren Gemische, eines oxidierten oder sulfonierten Kohlenwasserstoffs, von Kohlenmonoxid oder Wasserstoff als Reduktionsmittel im Falle der Gegenwart des Reduktionsmittels bei 705 bis 1095°C und im Falle der Abwesenheit des Reduktionsmittels bei 870 bis 1095°C in Kontakt gebracht wird. Für den Fachmann ist es aber überraschend, daß die durch Schwermetallverbindungen katalysierte Bildung von hochkondensierten aromatischen Kohlenwasserstoffen und Dioxinen, die bei der Abkühlung staubhaltiger Verbrennungsabgase in Gegenwart von Sauerstoff eintritt, durch Verbindungen, welche Ammoniumstickstoff enthalten, verhindert wird, da viele der Ammoniumstickstoff enthaltenden Verbindungen auch organische Gruppen aufweisen, die im Temperaturbereich von 400 bis

3

EP 0 476 727 B1

1000°C organische Radikale bilden dürften und damit die Bildung von hochkondensierten aromatischen Kohlenwasserstoffen und Dioxinen zumindest begünstigen.

Die zur Durchführung des erfindungsgemäßen Verfahrens verwendeten, Ammoniumstickstoff enthaltenden Verbindungen werden dem staubhaltigen Verbrennungsabgasstrom zugemischt, wenn er den Feuerraum verlassen hat, wobei der Bereich der Staubabscheidung wegen der dort vorhandenen relativ großen Gasverweilzeiten und der weitgehend gleichbleibenden Gastemperatur von vorzugsweise 600 bis 900°C bevorzugt ist. Nachteilige Wirkungen der Ammoniumstickstoff enthaltenden Verbindungen auf das beim erfindungsgemäßen Verfahren verwendete Filterelement bzw. auf den Filtrationsvorgang konnten nicht beobachtet werden. Vielmehr wurde festgestellt, daß die gereinigten Abgase keine Rückstände enthalten, die den Ammoniumstickstoff enthaltenden Verbindungen entstammen, was auf die recht lange Verweilzeit der Abgase im Filterkuchen und am Filterelement zurückgeführt wird. Auch die abgetrennte Asche enthält insbesondere kein $NH_3$ in adsorbierter Form.

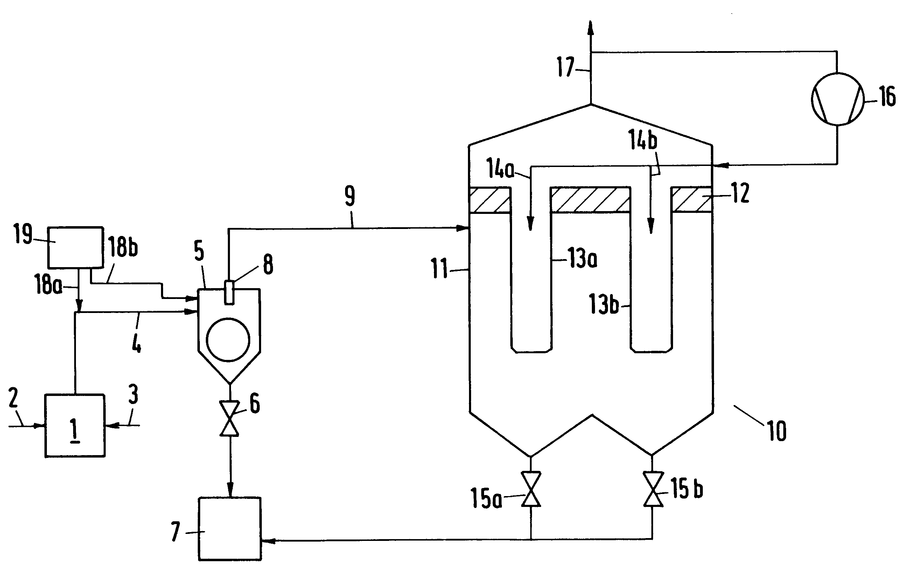

Der Gegenstand der Erfindung wird nachfolgend anhand der Zeichnung näher erläutert, die das Fließbild des erfindungsgemäßen Verfahrens zeigt.

Im Feuerungsraum 1 wird der über eine Eintragsvorrichtung 2 zugeführte Müll mit der über die Leitung 3 zugeführten Luft bei 850 bis 1000°C verbrannt. Die heißen, staubhaltigen Verbrennungsabgase gelangen über den Rauchgaskanal 4 in einen als Fliehkraftentstauber wirkenden Zyklon 5, der mit einem feuerfesten keramischen Material ausgekleidet ist. Der im Zyklon 5 abgeschiedene Staub wird über die Leitung 6 in den Staubbunker 7 ausgetragen, wo die Abkühlung des Staubs erfolgt. Das vorentstaubte Abgas verläßt den Zyklon 5 über das Tauchrohr 8 sowie die Abgasleitung 9 und gelangt in das Entstaubungsfilter 10.

Das Entstaubungsfilter 10 besteht aus dem wärmeisolierten Gehäuse 11, in dem die aus einem keramischen Material oder aus Stahl bestehende Platte 12 angeordnet ist, welche die Rohgasseite von der Reingasseite trennt. In der Platte 12 sind mehrere Filterkerzen 13a, 13b gasdicht eingepaßt. Die Filterkerzen sind selbsttragend und bestehen aus mit einem anorganischen Bindemittel zu einem Filz verdichteten keramischen Fasern. Die Filterkerzen werden auch im Langzeitbetrieb durch Temperaturen von 600 bis 1000°C nicht geschädigt. Anstelle eines aus keramischen Fasern gebildeten Filzes können die Filterkerzen auch aus gesintertem keramischen Material bestehen.

Das vorentstaubte Verbrennungsabgas tritt mit einer Temperatur von 750 bis 850°C von außen nach innen durch die Filterkerzen 13a, 13b hindurch, wobei der Staub auf der Außenseite der Filterkerzen zurückgehalten wird. In regelmäßigen Abständen wird jeweils mindestens eine Filterkerze bzw. eine Gruppe von Filterkerzen durch Rückspülung oder durch Pulsen abgereinigt, wobei das zur Abreinigung verwendete Gas über die Leitungen 14a, 14b im Innern der Filterkerze aufgegeben wird und den an der Außenseite der Filterkerze befindlichen Staubkuchen abwirft, der über den trichterförmigen Boden des Gehäuses 11 und die Leitungen 15a, 15b in den Staubbunker 7 gelangt, wo er abgekühlt wird. Zur Abreinigung der Filterkerzen 13a, 13b wird vorteilhaft entstaubtes Abgas verwendet, das dem Reingasstrom entnommen und durch den Kompressor 16 auf den erforderlichen Betriebsdruck gebracht wird. Das entstaubte Verbrennungsabgas hat einen Staubgehalt <1 mg/Nm$^3$, der ständig eingehalten und auch kurzzeitig nicht überschritten wird. Das heiße entstaubte Verbrennungsabgas gelangt über den Reingaskanal 17 in einen Wärmeaustauscher (Dampferzeuger), der in der Zeichnung nicht dargestellt ist.

In den Rauchgaskanal 4 und den Zyklon 5 wird dem staubhaltigen Abgasstrom über die Leitungen 18a, 18b aus dem Vorratstank 19 Gülle zudosiert, die durch Sedimentation von den festen Bestandteilen befreit wird, bevor sie in den Vorratstank 19 fließt. Der Inhalt des Vorratstanks 19 wird auf seinen Gehalt an Ammoniumstickstoff analysiert und dem Abgasstrom wird pro m$^3$ eine Güllemenge zugegeben, die ca. 0,25 g Ammoniumstickstoff enthält.

Es ist möglich, einen Teil der im Verbrennungsabgas enthaltenen Wärme vor dem Entstaubungsfilter 10 abzuführen, so daß die Entstaubungstemperatur z.B. bei 600 bis 800°C liegt. Beispielsweise können im Zyklon 5 Wärmeaustauscherrohre angeordnet werden.

Weder in dem im Staubbunker 7 anfallenden Staub noch in dem in die Atmosphäre abgegebenen Reingas konnten während eines Zeitraums von 1 Monat hochkondensierte aromatische Kohlenwasserstoffe und Dioxine nachgewiesen werden. Die Filterelemente 13a, 13b hatten ihre Leistung während dieser Zeit nicht verändert.

4

EP 0 476 727 B1

Die nachfolgende Tabelle belegt den überraschenden Erfolg des erfindungsgemäßen Verfahrens.

| | ohne Zugabe von Gülle | mit Zugabe von Gülle |
|---|---|---|
| Abgaszusammensetzung | | |
| % $CO_2$ | 9,8 | 9,8 |
| % $O_2$ | 10,4 | 10,4 |
| Abgastemperatur (°C) | 743 | 743 |
| Güllemenge (l/$N^3$ Abgas) | - | 0,08 |
| N-Gehalt der Gülle (kg/$m^3$) | - | 2,9 |
| $NO_x$-Gehalt des Reingases | 640 | 325 |
| Dioxingehalt des Reingases, gemessen als TCDD-Äquivalente (ng/$Nm^3$) | 0,312 | nicht nach-weisbar |

**Patentansprüche**

1. Verfahren zur Vermeidung der Bildung von hochkondensierten aromatischen Kohlenwasserstoffen und Dioxinen in Verbrennungsanlagen, vorzugsweise in Müllverbrennungsanlagen, bei dem die Entstaubung der Verbrennungsabgase hinter der Feuerung bei Temperaturen von 300 bis 1000°C, vorzugsweise 400 bis 900°C, erfolgt, wobei den Verbrennungsabgasen hinter der Feuerung in einem Temperaturbereich von 400 bis 1000°C, vorzugsweise 600 bis 900°C, $NH_3$, Ammoniumsalze, aliphatische primäre, sekundäre oder tertiäre Amine, Salze der Amine, Harnstoff, Eiweißkörper, Eiweißabbauprodukte oder organische Abfälle, die Ammoniumstickstoff enthalten, in einer solchen Menge zugegeben werden, daß in einem $Nm^3$ Verbrennungsabgas 0,1 bis 2 g Ammoniumstickstoff vorhanden sind, und daß zur Staubabscheidung ein aus $SiO_2$, $Al_2O_3$ und/oder $ZrO_2$ sowie einem anorganischen Bindemittel bestehendes keramisches Filterelement mit einem Porenvolumen von 50 bis 90 % verwendet wird.

2. Verfahren nach Anspruch 1, dadurch gekennzeichnet, daß als organischer Abfall Gülle verwendet wird.

3. Verfahren nach den Ansprüchen 1 bis 2, dadurch gekennzeichnet, daß dem keramischen Filterelement ein Fliehkraftabscheider, vorzugsweise ein Zyklon, vorgeschaltet wird.

4. Verfahren nach den Ansprüchen 1 bis 3, dadurch gekennzeichnet, daß $NH_3$, Ammoniumsalze, aliphatische primäre, sekundäre oder tertiäre Amine, Salze der Amine, Harnstoff, Eiweißkörper, Eiweißabbauprodukte oder organische Abfälle, die Ammoniumstickstoff enthalten, den Verbrennungsabgasen in den Prozeßapparaten zugegeben werden, die der Entstaubung der Abgase dienen.

**Claims**

1. A process for avoiding the formation of highly-condensed aromatic hydrocarbons and dioxins in combustion plants, preferably in refuse incineration plants, in which the dust removal from the combustion waste gases takes place after the furnace at temperatures of 300 to 1000°C, preferably 400 to 900°C, in which $NH_3$, ammonium salts, aliphatic primary, secondary or tertiary amines, salts of the amines, urea, proteins, protein decomposition products or organic waste materials which contain ammonia nitrogen are added to the combustion waste gases after the furnace in a temperature range of 400 to 1000°C, preferably 600 to 900°C, in such a quantity that 0.1 to 2 g ammonia nitrogen are present in one $Nm^3$ combustion waste gas, and that a ceramic filter element made of $SiO_2$, $Al_2O_3$ and/or $ZrO_2$ and also an inorganic binder and having a pore volume of 50 to 90% is used for dust

5

removal.

2.  A process according to Claim 1, characterised in that liquid manure is used as the organic waste material.

3.  A process according to Claims 1 to 2, characterized in that the ceramic filter element is preceded by a centrifugal separator, preferably a cyclone.

4.  A process according to Claims 1 to 3, characterized in that NH$_3$, ammonium salts, aliphatic primary, secondary or tertiary amines, salts of the amines, urea, proteins, protein decomposition products or organic waste materials which contain ammonia nitrogen are added to the combustion waste gases in the process apparatus which serve for removing dust from the waste gases.

**Revendications**

1.  Procédé pour empêcher la formation d'hydrocarbures aromatiques très condensés et de dioxines dans des installations de combustion, de préférence dans des installations d'incinération d'ordures, qui consiste à effectuer le dépoussiérage des effluents gazeux de combustion en aval du foyer à des températures de 300 à 1000 ° C, de préférence de 400 à 900 ° C, NH$_3$, des sels d'ammonium, des amines aliphatiques primaires, secondaires ou tertiaires, des sels d'amine, de l'urée, des protéines, des produits de décomposition de protéines ou des déchets organiques qui contiennent de l'azote ammoniacal étant ajoutés aux effluents gazeux de combustion en aval du foyer dans un intervalle de température de 400 à 1000 ° C, de préférence de 600 à 900 ° C, en une quantité telle qu'il y a de 0,1 à 2 g d'azote ammoniacal par m$^3$ normal d'effluents gazeux de combustion, et à utiliser, pour la séparation de poussières, un élément filtrant en céramique, en SiO$_2$, Al$_2$O$_3$ et/ou ZrO$_2$ ainsi qu'en un liant minéral ayant un volume de pores de 50 à 90 %.

2.  Procédé suivant la revendication 1, caractérisé en ce qu'il consiste à utiliser comme déchet organique du purin.

3.  Procédé suivant la revendication 1 ou 2, caractérisé en ce qu'un séparateur par force centrifuge, de préférence un cyclone, est monté en amont de l'élément filtrant en céramique.

4.  Procédé suivant l'une des revendications 1 à 3, caractérisé en ce qu'il consiste à ajouter NH$_3$, des sels d'ammonium, des amines aliphatiques primaires, secondaires ou tertiaires, des sels d'amines, de l'urée, des produits protéiniques, des produits de décomposition des protéines ou des déchets organiques qui contiennent de l'azote ammoniacal, aux effluents gazeux de combustion dans les installations du procédé qui servent à dépoussiérer les effluents gazeux.